# EUROPÄISCHE PATENTSCHRIFT

(11) **EP 4 663 320 B1**
(45) Veröffentlichungstag und Bekanntmachung des Hinweises auf die Patenterteilung: **29.04.2026**
(21) Anmeldenummer: 24181404.5
(22) Anmeldetag: 11.06.2024
(51) Int. Cl.: B21D 22/20, B21D 53/88, B60K 1/04, C21D 1/673, H01M 50/224, H01M 50/244, C21D 9/48

(54) **WARMGEFORMTE BATTERIEWANNE MIT WEICHEN ECKBEREICHEN**
HOT-FORMED BATTERY TRAY WITH SOFT CORNER REGIONS
BAC DE BATTERIE FORMÉ À CHAUD AVEC COINS SOUPLES

(43) Veröffentlichungstag der Anmeldung: 17.12.2025
(73) Patentinhaber: Benteler Automobiltechnik GmbH, 33102 Paderborn (DE)
(72) Erfinder: BUSE, Christian, 33165 Lichtenau (DE); HANDING, Christian, 33449 Langenberg (DE); ERHARDT, Rüdiger, 33102 Paderborn (DE); FROST, Georg, 32839 Steinheim (DE)
(74) Vertreter: Osterhoff, Utz

(56) Entgegenhaltungen:
- EP-A1- 4 318 760
- DE-A1- 102017 102 699
- DE-A1- 102017 120 533
- DE-A1- 102018 106 399
- DE-B4- 102017 102 685
- US-A1- 2022 384 893

## Beschreibung

Die vorliegende Erfindung betrifft eine Batteriewanne für einen Batterieträger eines Elektrofahrzeuges gemäß den Merkmalen im Oberbegriff von Anspruch 1.

Aus dem Stand der Technik ist die Elektromobilität bekannt. Hierbei werden Kraftfahrzeuge, auch Elektrofahrzeuge genannt, durch Elektromotoren angetrieben. Die dazu notwendige Energie wird in einem entsprechenden Batteriespeicher mitgeführt. Solche Batteriespeicher werden auch Batterieträger oder Battery Trays genannt. Diese weisen eine Batteriewanne auf, die optional mit einem Deckel verschlossen ist. Im Innenraum des wannenförmigen Gehäuses sind dann die Antriebsbatterien bzw. Batterien untergebracht. Zumeist ist ein solcher Batterieträger im Unterflurbereich eines Elektrofahrzeuges angeordnet.

Die Batterieträger sind zumeist aus einem metallischen Werkstoff, insbesondere einem Stahl- oder Aluminiumwerkstoff hergestellt. Die Batterien im Innenraum des Batterieträgers sollen vor Umwelteinflüssen, insbesondere Witterungsbedingungen und Feuchtigkeit geschützt werden. Gleichzeitig soll insbesondere im Crashfall der Innenraum des Batterieträgers fluiddicht ausgebildet sein, so dass eventuelle Flüssigkeiten, insbesondere Kühlflüssigkeiten bzw. Flüssigkeiten in der Batterie, nicht an die Umwelt gelangen.

Solche Batterieträger sind zumeist aus metallischem Werkstoff hergestellt, insbesondere aus einem Stahlwerkstoff, jedoch auch aus einem Aluminiumwerkstoff. Insbesondere beim Stahlwerkstoff sind die Batteriewannen als Umformbauteil bekannt. Hierzu wird mittels eines Umformprozesses, insbesondere eines Tiefziehprozesses die Batteriewanne geformt.

Auch ist es bekannt, solche Batteriewannen als warmumgeformte und pressgehärtete Bauteile herzustellen. Hierbei können Zugfestigkeiten Rm von über 1000 MPa mit Hilfe der Warmumform-Presshärtetechnologie erreicht werden.

Aus der DE 10 2017 102 699 A1, auf welche der Oberbegriff des Anspruchs 1 basiert, ist ein durch Warmumformen und Presshärten hergestellter Batterieträger bekannt, der verbesserte Crasheigenschaften hat und im Falle eines Aufpralls nicht nach dem Prinzip einer Crashbox deformiert.

Aufgabe der vorliegenden Erfindung ist es, eine Batteriewanne für einen Batterieträger bereitzustellen, die durch Umformen hergestellt ist, gleichzeitig jedoch hinsichtlich ihrer geometrischen Abmessung optimiert ist, insbesondere hinsichtlich der Kapazität zur Aufnahme von im Innenraum angeordneten Batterien.

Die zuvor genannte Aufgabe wird erfindungsgemäß mit einer Batteriewanne für einen Batterieträger eines Elektrofahrzeuges mit den Merkmalen im Anspruch 1 gelöst. Vorteilhafte Ausgestaltungsvarianten der vorliegenden Erfindung sind Gegenstand der abhängigen Ansprüche.

Ein verfahrenstechnischer Teil der Aufgabe wird weiterhin mit den Merkmalen gemäß einem Verfahren des Anspruches 11 gelöst.

Die Batteriewanne für einen Batterieträger eines Elektrofahrzeuges weist einen Boden auf. Der Boden ist im Wesentlichen flächig ausgebildet. Der Boden kann jedoch optionale Verstärkungsstrukturen aufweisen, um beispielsweise eine Versteifung, ein Unterfahrschutz und/oder einen Kühlboden mit bereitzustellen.

Von dem Boden sind einstückig und werkstoffeinheitlich erstreckend eine umlaufende Wand ausgebildet. Die umlaufende Wand weist somit auf die Kraftfahrzeugquerrichtung bezogen, zwei außenliegende Seitenwände auf. Die umlaufende Wand weist ferner in Kraftfahrzeuglängsrichtung frontseitig eine Vorderwand auf und heckseitig eine Rückwand auf. Flächenmäßig in Draufsicht weist die Batteriewanne, insbesondere eine flächenmäßige Erstreckung größer 2 m² auf. Die Seitenwand weist bevorzugt eine Höhe größer 10 cm, insbesondere größer 12 cm, besonders bevorzugt größer 15 cm und ganz besonders bevorzugt größer 18 cm auf.

Optional ist ferner an der umlaufenden Wand ein von dieser nach außen abstehender Flansch ausgebildet. Der Flansch ist ebenfalls bevorzugt umlaufend ausgebildet. Der Flansch kann als Auflagefläche und gleichzeitig Anlage und Dichtfläche für einen Deckel ausgebildet sein. Der Deckel kann flach ausgebildet sein. Der Deckel kann auch nach dem Prinzip einer Haube aufgesetzt sein.

Die Batteriewanne ist ferner aus einer einzigen Stahlblechplatine hergestellt. Die Stahlblechplatine ist insbesondere aus einer härtbaren Stahllegierung bereitgestellt. Beispielsweise kann ein Bor-Mangan-Stahl eingesetzt werden, beispielsweise 22MnB5 ausgebildet sein. Die Batteriewanne ist ferner durch Warmumformen und Presshärten hergestellt und weist somit eine Zugfestigkeit Rm ≥ 1250 MPa auf.

Erfindungsgemäß zeichnet sich die Batteriewanne nunmehr dadurch aus, dass in einem jeweiligen Eckbereich der Seitenwände zueinander die Zugfestigkeit Rm kleiner 1000 MPa ist. Eckbereich ist der Bereich, an dem die jeweiligen Seitenwände angeordnet sind. Auf die Kraftfahrzeugquerrichtung bezogen, beispielsweise die außenliegende Seitenwand mit der Rückwand bzw. mit der Vorderwand, mithin der sich ergebende Eckbereich. Auch dieser Eckbereich ist einstückig und werkstoffeinheitlich ausgebildet, da die gesamte Batteriewanne durch einen entsprechenden Umformprozess, insbesondere Tiefziehprozess hergestellt ist. Dadurch, dass in dem Eckbereich ein Werkstoffgefüge mit geringerer Festigkeit ausgebildet ist, kann somit der Umformprozess optimiert werden. Es wird ein gezielter Materialfluss aus dem Boden, aus dem restlichen Bereich der Wand bzw. den Seitenwänden und/oder ein Materialfluss aus dem Flansch erreicht, so dass es in dem Eckbereich keine Rissbildung bzw. zu hohe Abstreckung gibt. Der Eckbereich kann somit optimaler bzw. schärfer ausgeformt werden. Insbesondere wird die erfindungsgemäße Batteriewanne mit dem nachfolgend beschriebenen Verfahren hergestellt, so dass sich insbesondere dann ebenfalls die genannten Produkteigenschaften einstellen.

Erfindungsgemäß liegt der Eckbereich zwischen zwei aneinander angrenzenden Seitenwänden. Der Eckbereich kann jedoch auch zumindest einen Teil des Übergangs vom Boden in dem jeweiligen Eckbereich der Seitenwände mit einschließen, wobei der Übergang als Tiefziehradius geformt ist.

Ist ein Flansch vorgesehen, so kann der Eckbereich des Flansches ebenfalls das relativ gesehen weichere Werkstoffgefüge mit einer Zugfestigkeit Rm kleiner 1100 MPa aufweisen. Erfindungsgemäß bevorzugt jedoch weist im Eckbereich auch der außenliegende Flanschbereich die relativ gesehen höhere Festigkeit mit einer Zugfestigkeit Rm größer 1250 MPa auf. Insbesondere hinsichtlich einer möglichen Crashsicherheit bzw. Versteifung der Batteriewanne kann hierdurch ein Optimum erreicht werden.

Besonders bevorzugt ist die relativ weichere Zugfestigkeit in dem Eckbereich zwischen 550 und 800 MPa ausgebildet, insbesondere wird dies erreicht durch gezieltes Einstellen eines Mischgefüges bzw. Zwischenstufengefüges. Dies ist im Eckbereich ein Mischgefüge aus Bainit und/oder Ferrit und/oder Perlit mit entsprechenden Anteilen von Martensit sowie gegebenenfalls Rest Austenit.

Im übrigen Bereich der Batteriewanne, insbesondere im Boden und den Seitenwänden sowie dem Flansch ist dann ein im Wesentlichen martensitisches Gefüge ausgebildet. Dieses weist eine Zugfestigkeit Rm größer 1250 MPa, insbesondere größer 1350 MPa, besonders bevorzugt größer 1500 MPa auf.

Dies ist ein wesentlicher Vorteil der Erfindung. Aufgrund der sehr hohen Zugfestigkeit Rm im Bereich der gesamten Batteriewanne kann ein dünnwandiges Material verwendet werden. Es werden hohe Festigkeitseigenschaften, somit eine hohe Steifigkeit, jedoch auch hohe Crashsicherheit sowie hohe Tragfähigkeit für die im Innenraum angeordneten Batterien, die mehrere einhundert Kilogramm wiegen können, erreicht. Durch die geringe Wandstärke, insbesondere kleiner 5 mm, besonders bevorzugt kleiner 3 mm, insbesondere zwischen 1 mm und 2 mm, weist die Batteriewanne ein geringes Eigengewicht auf.

Die Batteriewanne kann im Rahmen der Erfindung zum Einlegen bzw. Auflegen von Antriebsbatterien verwendet werden. Die Batteriewanne kann aber auch als Haube von oben über die Batterien gestülpt werden, um mit einer Bodenplatte oder einer weiteren Batteriewanne einen geschlossenen Batterieträger zu bilden.

Durch den weiteren erfindungsgemäßen Ansatz, insbesondere bei der Herstellung insbesondere bei dem Tiefziehverfahren mit weichen Eckbereichen, kann insbesondere eine geringe Wandstärke in dem Ausgangsmaterial der Platine verwendet werden, da mit nur geringen Abstreckungen und/oder geringer Rissbildung zu rechnen ist. Somit kann die Wandstärke aufgrund der erfindungsgemäßen Ausprägung der Eckbereiche minimiert werden.

Weiterhin ist vorgesehen, dass in den Übergängen von Boden zu Seitenwand die Zugfestigkeit Rm ebenfalls größer 1250 MPa ausgebildet ist. Diese Übergänge erstrecken sich über mindestens 70 % der Länge einer jeweiligen Seitenwand. Insbesondere ergibt sich hierdurch wiederum eine hohe Crashsicherheit im Falle insbesondere eines Seitencrashs, gleichzeitig jedoch auch im Falle eines Frontalcrashs, da über die für genannte Crashszenarien wesentlichen Teile des Übergangs eine entsprechend hohe Zugfestigkeit zu verzeichnen ist, die wiederum der Batteriewanne eine hinreichende Eigensteifigkeit verleiht.

Besonders bevorzugt kann weiterhin außenseitig an der Seitenwand und/oder an dem Flansch ein Hohlprofil gekoppelt sein, beispielsweise ein L-förmiges Hohlprofil oder auch ein Hutprofil. Dieses Hutprofil kann beispielsweise mittels eines Fügevorganges, insbesondere mittels Punktschweißen von außen an die Seitenwand gekoppelt werden. Eventuelle Entfestigungen sind dabei zu vernachlässigen. Das Hohlprofil bzw. eine entsprechende Seitenverstärkung selbst ist nicht der Fahrzeugschweller oder ein Fahrzeugleiterrahmenlängsträger. Das Hohlprofil ist integraler Bestandteil des Batterieträgers selber. Dieser bietet somit eine Verbesserung des Seitenaufprallschutzes als auch eine Möglichkeit einer Karosseriebefestigung, mithin kann der Batterieträger über das Hohlprofil an einer Karosserie befestigt sein. Beispielsweise kann der Batterieträger von unten an einen Fahrzeugschweller oder einen Fahrzeugleiterrahmenlängsträger gekoppelt werden, beispielsweise angeschraubt werden.

Besonders bevorzugt weist weiterhin die Platine eine Antikorrosionsbeschichtung auf, insbesondere ist dies beispielsweise eine Beschichtung auf Aluminium-Silizium-Basis.

Eine weitere erfindungsgemäße Möglichkeit sieht vor, dass die Seitenwände front- und heckseitig sowie an den jeweiligen außenliegenden Seiten eine voneinander verschiedene Höhe aufweisen. Ein entsprechender Deckel, welcher mit der Batteriewanne gekoppelt ist, ist dann komplementär an die unterschiedlichen Höhen der Seitenwände angepasst.

Ferner können dann in den Boden einstückig und werkstoffeinheitlich Längs- und/oder Quersicken eingeformt sein. Auch kann eine entsprechende Kühlkanalstruktur eingeformt sein bzw. in den Boden eingeprägt sein. Somit ist eine Versteifung des Bodens ausgebildet, die als Unterfahrschutz dienen kann bzw. als Bollerschutz dienen. Ebenfalls kann eine Kühlkanalstruktur bzw. ein entsprechender Abstandhalter in den Boden eingeprägt sein. Diese werden dann insbesondere auf die Kraftfahrzeugvertikalrichtung in Einbausituation nach unten zeigend ausgebildet. Mit einem weiteren Bodenblech bzw. innenliegenden Blech kann dann eine Kühlkanalstruktur ausgebildet sein, so dass in der Batteriewanne angeordnete Batterien bzw. auf dem Boden aufstehende Batterien entsprechend gekühlt werden können.

Ein wichtiger Aspekt der Erfindung ist, dass der Eckbereich bezogen auf den Innenraum nicht zusätzlich nach außen verlagert ist. Mithin liegt der Eckbereich jeweils hinter einer Verlängerung der Seitenwand bzw. der Querwand. Insbesondere bei außenseitig angeordneten Verstärkungsprofilen können diese somit bis in den Eckbereich hinein verlaufen. Wäre der Eckbereich nochmals nach außen verlagert bzw. verstellt, wäre hier ein durchgängiges Verbinden mit einem Längsprofil nicht möglich.

Die vorliegende Erfindung umfasst weiterhin ein entsprechendes Verfahren zur Herstellung der zuvor beschriebenen Batteriewanne mit folgenden Verfahrensschritten:
- Bereitstellen einer Platine aus einer härtbaren Stahllegierung,
- Partielles Austenitisieren oder vollständiges Austenitisieren und partielles Zwischenkühlen der späteren Eckbereiche,
- Einlegen in ein Warmumform- und Presshärtewerkzeug, und Warmumformen und Presshärten, wobei in der Batteriewanne eine Zugfestigkeit Rm größer gleich 1250 MPa eingestellt wird und in den Eckbereichen eine Zugfestigkeit kleiner 1100 MPa.

Unter Austenitisieren ist insbesondere eine Erwärmung auf über Ac3-Temperatur, mithin je nach verwendeter härtbarer Stahllegierung bei einer Temperatur von größer 900° C zu verstehen.

Bei dem erfindungsgemäßen Verfahren ist vorstellbar, zunächst eine Platine aus einer härtbaren Stahllegierung partiell zu austenitisieren mithin in den Bereichen, in denen der spätere Boden sowie die Seitenwände ausgebildet sind, eine Temperatur über Ac3 zu erzeugen. Es kann jedoch auch und das ist im Sinne der Erfindung bevorzugt, ein vollständiges Austenitisieren stattfindet, insbesondere bei einer beschichteten Platine, so dass die Vorbeschichtung durchlegiert.

Nach dem vollständigen Austenitisieren werden die späteren Eckbereiche gezielt abgekühlt bzw. zwischengekühlt. Dies kann beispielsweise durch ein Anblasen mittels Düsen erfolgen. Auch kann eine Kontaktkühlung erfolgen. Es kann sich hierbei auch ein Zwischenstufengefüge bilden. Insbesondere wird gegenüber der Ac3-Temperatur um eine Temperatur von 70° C bis 200° C, insbesondere 100° C bis 150° C abgekühlt, mithin weisen diese Bereiche eine Temperatur bevorzugt zwischen 600° C und 800° C auf. Hierdurch sind diese Bereiche weniger weich, so dass ein gezielter Materialfluss aus dem wärmeren und damit weicheren benachbarten Boden, Seitenwandbereichen und/oder dem Flansch in den Eckbereich erfolgt und hierdurch während des Umformens im Eckbereich selbst kritische Abstreckungen gezielt vermieden werden. Es kommt somit zu einer zu vernachlässigenden Materialausdünnung im umzuformenden Eckbereich. Rissbildungen werden ebenfalls vermieden. Die Ausgangsplatine kann somit eine optimierte, insbesondere geringere Wandstärke aufweisen, ohne dass ein Reißen oder zu starkes Ausdünnen im Eckbereich während des späteren Warmumformprozesses zu verzeichnen ist. Die so partiell temperierte Stahlblechplatine wird in ein Warmumformwerkzeug eingelegt bzw. in dem Warmumformwerkzeug zuvor beschrieben partiell gekühlt. Im Anschluss findet dann der Warmumformprozess statt sowie durch ein entsprechendes Abschreckhärten bzw. ein Presshärten, die Härtung und eine Umwandlung in ein gehärtetes Werkstoffgefüge. Dies ist aus dem zuvor austenitischen Bereich dann ein im Wesentlichen martensitisches hartes Werkstoffgefüge. In den zwischengekühlten Bereichen wird ein Mischgefüge aus Perlit, Ferrit und/oder Bainit eingestellt in Verbindung mit martensitischen Anteilen sowie Rest Austenitanteilen. Die Eckbereiche bleiben auch im fertig hergestellten Bauteil dann relativ gesehen weich. Durch den höheren Umformgrad in den Eckbereichen hat hier auch eine Abstreckung stattgefunden. Dadurch, dass der Bereich zum einen zwischengekühlt ist und dadurch besser umformbar ist, jedoch auch im späteren fertigen Bauteil eine weichere Zugfestigkeit hat, ist eine verspätete Rissbildung (delayed fracturing) während weiterer Herstellung- und Montageschritte einerseits und bei einem Fahrzeugcrash andererseits sicher vermieden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung.

Es zeigen:
- Figur 1: eine perspektivische Ansicht einer erfindungsgemäß hergestellten Batteriewanne mit weichem Eckbereich,
- Figur 2a + b: eine Platine sowie eine später ausgeformte Batteriewanne in Draufsicht,
- Figur 3ab +b: eine Platine sowie eine später ausgeformte Batteriewanne in Draufsicht in alternativer Ausgestaltungsvariante mit weichem Flanschbereich,
- Figur 4: einen Querschnitt durch einen Eckbereich gemäß Schnittlinie IV-IV aus Figur 2,
- Figur 5: einen Querschnitt gemäß der Schnittlinie V-V aus Figur 2.

In den Figuren werden für gleiche oder ähnliche Bauteile dieselben Bezugszeichen verwendet, auch wenn eine wiederholte Beschreibung oder Darstellung aus Vereinfachungsgründen entfällt.

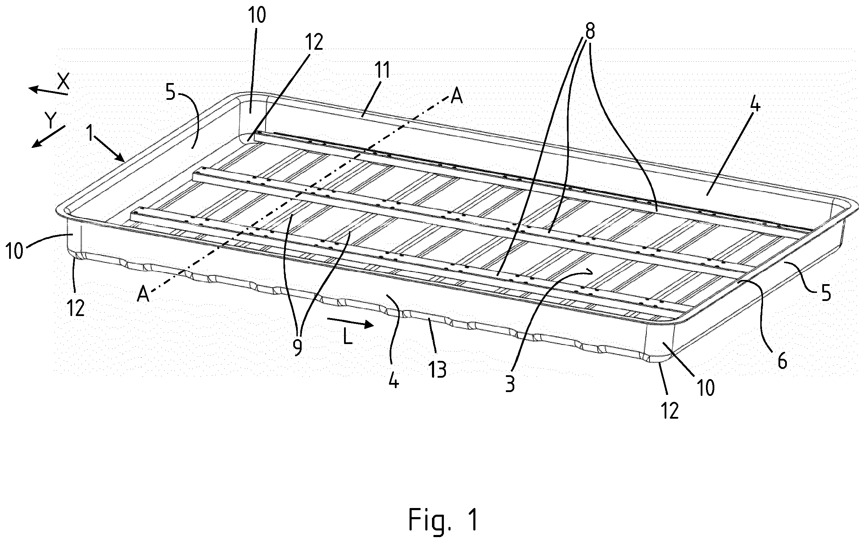

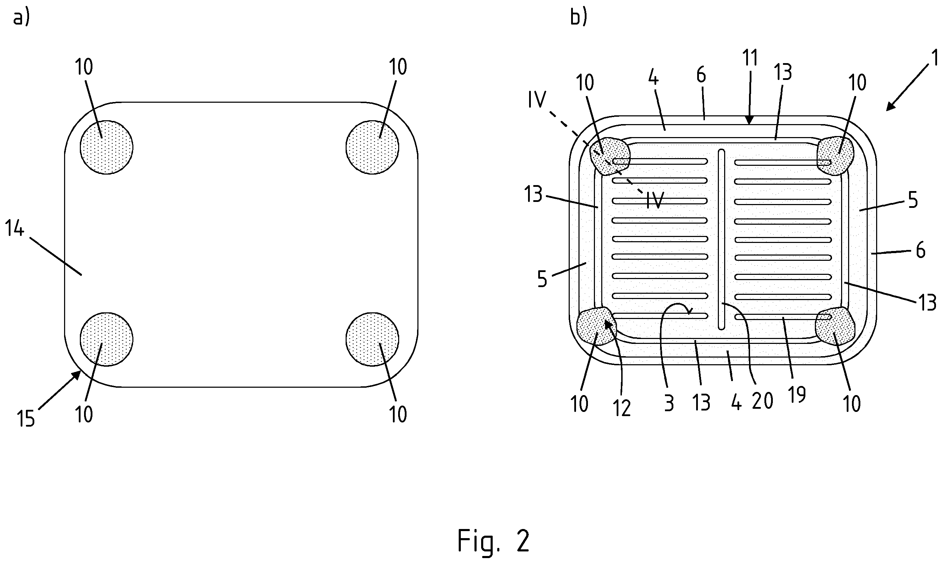

Figur 1 zeigt eine erfindungsgemäß hergestellte tiefgezogene Wanne 1 für einen in Figur 2 dargestellten Batterieträger 2. Der Batterieträger 2 weist die Wanne selbst auf, wobei die Wanne 1 einen Boden 3 sowie in einem Winkel α zu dem Boden 3 umlaufenden Wand 4, 5 aufweist. Die Wände werden nachfolgend auch als Längswand 4 sowie Querwand 5 bezeichnet. Seitlich abstehend von den Wänden ist ferner ein jeweiliger Flansch 6 angeordnet. Der Flansch 6 kann als Ziehflansch während des Tiefziehens genutzt werden sowie im Anschluss daran zur Koppelung mit einem dargestellten Deckel 7. In der Wanne 1 selbst können Längsstreben 8 angeordnet sein. Die Längsstreben 8 sind insbesondere zur Anordnung und Befestigung von nicht näher dargestellten Batterien in der Wanne 1 geeignet. Ferner können, wie in Figur 1 dargestellt Quersicken 9 im Boden 3 der Wanne 1 eingeformt sein.

Erfindungsgemäß ist nunmehr vorgesehen, dass ein jeweiliger Eckbereich 10 eine geringere Zugfestigkeit aufweist im Gegensatz zu den Seitenwänden 4, 5, die aus den jeweiligen Längswänden 4 bzw. Querwänden 5 gebildet sind. Ein außen umlaufender Flansch 6 steht jeweils von den Seitenwänden, mithin den Querwänden 5 und den Längswänden 4, ab. Flansch 6, Längswände 4, Querwände 5 und Boden 6 sind einstückig und werkstoffeinheitlich aus einer Platine hergestellt. Es handelt sich somit um ein durch Umformen hergestellten Bauteil, welches nicht durch weitere Kopplung oder sonstiges hergestellt ist. Der weiche Eckbereich 10 ist dabei im Sinne der Erfindung bevorzugt, der Anbindungsbereich zwischen Längswand 4 und Querwand 5, also seitlicher Seitenwand bezogen auf die Kraftfahrzeugquerrichtung Y bzw. Vorderwand oder Rückwand, mithin Querwand 5 bezogen auf die Kraftfahrzeuglängsrichtung X.

Ferner ist ein Übergang 11 ausgebildet von der jeweiligen Seitenwand 4 bzw. 5 zu dem Flansch 6. Der Übergang 11 kann ein weiches Werkstoffgefüge aufweisen, analog zu dem Werkstoffgefüge des Flansches 6. Er kann jedoch auch hart ausgebildet sein.

Das weichere Werkstoffgefüge mit einer Zugfestigkeit Rm kleiner 1100 MPa kann auch im Bereich des Flansches 6 bzw. in einem übergehenden Eckbereich 12 ausgebildet sein. Dies ist dann der Bereich, in dem der Eckbereich in den Boden 3 übergeht. Dies ist auch noch einmal auf die Bildebene von Figur 1 bezogen unten rechts dargestellt.

Ein jeweiliger Übergang 13 von Boden 3 zu Seitenwand, mithin Querwand 5 oder Längswand 4, ist bevorzugt mit der höheren Zugfestigkeit größer 1250 MPa ausgebildet. Dieser erstreckt sich in Längsrichtung L über mindestens 70 % der hier dargestellten Längswand 4. Umlaufend ist der Übergang 13 dann bevorzugt zwischen Boden 3 und jeweiliger Seitenwand 4, 5 ausgebildet über mindestens 70 %. Ferner ist ein Übergang 11 ausgebildet von der jeweiligen Seitenwand 4 bzw. 5 zu dem Flansch 6. Der Übergang 11 kann ein weiches Werkstoffgefüge aufweisen, analog zu dem Werkstoffgefüge des Flansches 6.

Bezugnehmend auf die Darstellung in Figur 1, jedoch für den gesamten Offenbarungsgehalt dieser Druckschrift ist dann in dem jeweils geraden Längs- oder Querabschnitt der Seitenwand 4 bzw. Querwand 5 das weiche Werkstoffgefüge nicht ausgebildet. Insbesondere vom jeweiligen Eckbereich ausgehend, in dem der gerade Abschnitt der Seitenwand 4 bzw. der Querwand 5 beginnt, ist weniger als 10 %, insbesondere weniger als 5 %, bevorzugt weniger als 4 % der Länge, die in Längs- bzw. Querrichtung also in Kraftfahrzeug-X-Richtung oder -Y-Richtung verlaufen mit einem weichen Werkstoffgefüge ausgebildet. Der Rest der Seitenwand, also der überwiegende Teil der Seitenwand weist ein hartes Werkstoffgefüge auf.

Ferner können dann im Boden 3 Längssicken 19 bzw. Quersicken 20 eingeformt werden. Diese stehen dann gegenüber dem Boden 3 auf die Kraftfahrzeugvertikalrichtung nach oben oder auf die Kraftvertikalrichtung nach unten gerichtet über.

Wie die erfindungsgemäße Platine nunmehr vorbehandelt wird, um die spätere Batteriewanne daraus herzustellen, ist in Figur 2a und b dargestellt.

Figur 2a zeigt eine Platine 14 zur Herstellung der Batteriewanne 1. Diese Platine 14 kann in den späteren außenliegenden Eckbereichen abgerundet ausgebildet sein, mithin abgerundete Ecken 15 aufweisen. In den später ausgebildeten Eckbereichen 10 wird die Platine 14 mit einer Temperatur von bevorzugt 600° C bis 750° C vortemperiert. Dies, insbesondere als Zwischenkühlen von einer zuvor vorhandenen Temperatur über Ac3-Temperatur, insbesondere bevorzugt größer 800° C, ganz besonders bevorzugt größer 900° C. Der restliche Bereich der Platine 14 weist eine Temperatur größer 800° C, insbesondere größer 900° C und somit ein austenitisches Werkstoffgefüge auf.

Gemäß Figur 2b ist die Batteriewanne 1 umgeformt worden. Die äußeren Abmessungen haben sich aufgrund des Tiefziehvorganges verkleinert bzw. verringert. Die späteren Eckbereiche 10 im jeweiligen Übergang der Querwände 5 zu den Längswänden 4 sind dann entsprechend weich ausgebildet. Durch einen Tiefziehvorgang, insbesondere nach dem Prinzip eines Napfziehens, weisen diese Eckbereiche 10 die höchsten Umformgrade auf. Aufgrund der Zwischenkühltemperatur ist hier eine bessere Umformung und/oder ein entsprechender Materialfluss aus benachbarten noch heißeren Bereichen zu verzeichnen. Vorhandene Abstreckungen werden durch eine weichere Zugfestigkeit dann auch an der fertigen Batteriewanne 1 kompensiert, so dass es hier nicht zu verzögerter Rissbildung kommt. Die restlichen Bereiche, die mit denen Querwände 5, Längswände 4, Übergang 13, der Boden 3 sowie der außen umlaufende Flansch 6 weisen eine Zugfestigkeit Rm größer 1250 MPa auf, so dass eine hinreichende Eigensteifigkeit gegeben ist.

In der Darstellung gemäß Figur 2b ist auch der außenliegende Flansch 6 gehärtet, mithin mit einer Zugfestigkeit Rm größer 1250 MPa ausgebildet. Ferner besitzt auch der außenliegende Eckbereich, bei Bezugszeichen 12 dargestellt, mithin der Übergang 13 vom Eckbereich 10 zum Boden 3, ein weicheres Werkstoffgefüge.

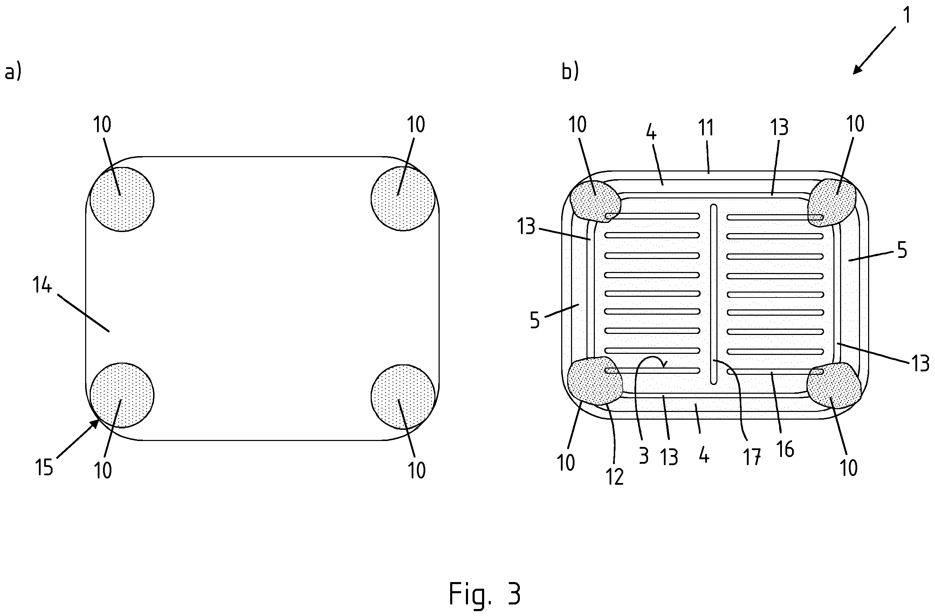

Figur 3a und 3b zeigen eine dazu alternative Ausgestaltungsvariante. Diese ist analog zu Figur 2a und b gesehen, wobei hier der außenliegende Flansch 6 nicht umlaufend gehärtet ist, sondern jeweils in dem Eckbereich 10 selbst ein weiches Werkstoffgefüge aufweist.

Ein erfindungsgemäßer Vorteil kann hier darin gesehen werden, dass bei einem Frontal- oder Seitencrash sich der ganze Eckbereich 10 aufgrund der geringen Festigkeit leicht verformen kann, ohne dabei zu reißen. Crashenergie kann somit durch Umformarbeit abgebaut werden. Auch im Eckbereich 10, wobei die Struktur bzw. eine durchgehende Wandung erhalten bleibt, so dass Undichtigkeiten auch beim Crashfall vermieden werden.

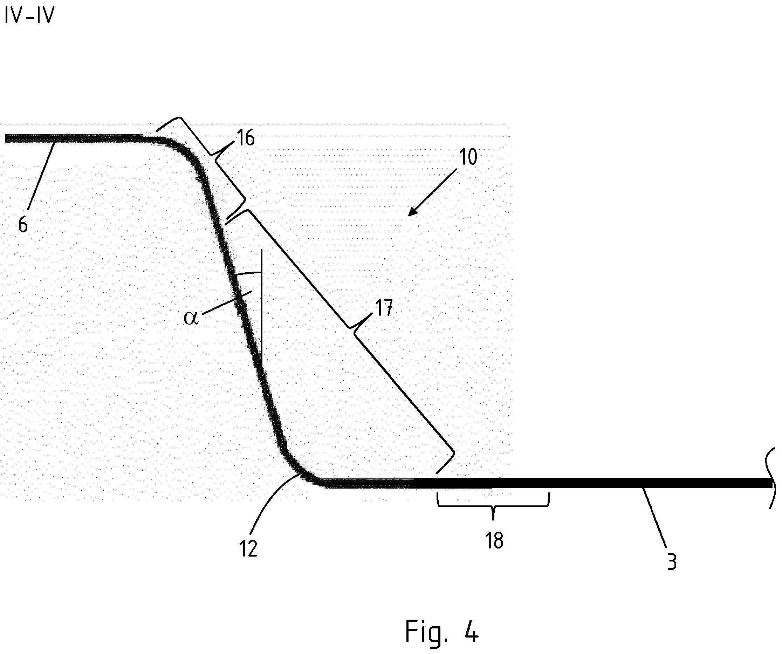

Figur 4 zeigt eine Querschnittsansicht gemäß der Schnittlinie IV-IV aus Figur 2. Hier ist eine Querschnittsansicht durch einen Eckbereich 10 ausgebildet zur Erkenntnis, dass auch im Eckbereich 10 der nach außen abstehende Flansch 6 ausgebildet ist, welcher im Wesentlichen in Horizontalrichtung verläuft. Der Boden 3 verläuft ebenfalls in Horizontalrichtung. Der Eckbereich 10 selbst ist in einem Winkel zur Vertikalen angeordnet und geht jeweils als außenliegender Eckbereich 12 vom Boden 3 als Teil in die jeweilige Seitenwand über. Der Flansch 6 selbst kann dann besonders bevorzugt vollständig gehärtet ausgebildet sein oder auch wenigstens teilweise weich ausgebildet sein. Es ergibt sich dann im Bereich von Bezugszeichen 16, also im Übergang 11 von Flansch 6 zum Seitenwandabschnitt im Eckbereich 10 eine Übergangszone als Zugfestigkeitsgradient. Der eigentliche Eckbereich 10 ist dann in dem Bereich 17 mit einem weichen Werkstoffgefüge ausgebildet. Wiederum ergibt sich ein Übergangsbereich 18 im Bodenbereich, wo eine Übergangszone bzw. Zugfestigkeitsgradient ausgebildet ist. Wiederum im Boden 3 ist dann der größte Teil nicht zwischengekühlt worden und weist somit nach dem Presshärten ein hartes Werkstoffgefüge auf, wie es in Figur 4 dargestellt ist.

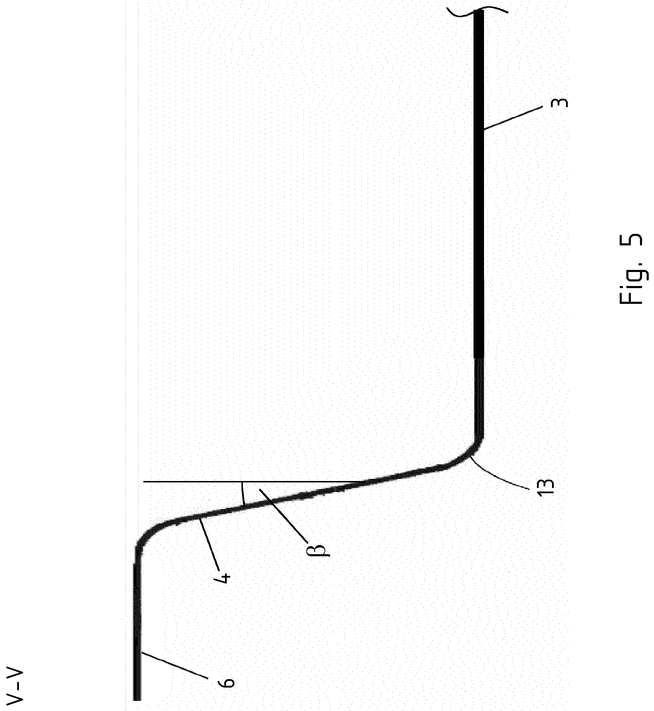

Figur 5 zeigt einen Querschnitt gemäß der Schnittlinie V-V aus Figur 2. Dies ist eine jeweilige Querschnittsansicht durch eine Längswand 4. Die Querschnittsansicht kann auch durch eine Querwand 5 erfolgen und wäre hier nahezu identisch. Zu erkennen ist ein in der jeweiligen Längswand 4 bzw. Querwand 5 ein Winkel β zu einer Vertikalen, der < 7°, insbesondere < 6°, bevorzugt ≤ 5° ausgebildet ist. Je kleiner der Winkel ausgebildet ist, desto besser ist die Bauraumausnutzung im Inneren der Batteriewanne 1. Je kleiner der Winkel ist, desto schwieriger gestaltet sich jedoch gleichsam auch der Tiefziehvorgang.

Für alle zuvor beschriebenen Ausführungsvarianten sowie mit Hinblick auf die allgemeine Beschreibung der Erfindung können folgende Besonderheiten gelten. Der Winkel α im Eckbereich Fig. 4, also in einer 45° Schnittebene gemäß der Schnittlinie IV-IV aus Figur 2 ist in Relation zum Winkel β gemäß Schnittlinie V-V, welcher in Fig. 5 dargestellt und beispielsweise an den Wänden 4 bzw. 5 liegt um höchstens 40 %, insbesondere höchstens 30 %, bevorzugt höchstens 25 % größer. Dies bedeutet, der Winkel α ist größer als der Winkel β. Die Relation ist gemäß der zuvorgenannten Winkelbereiche, mithin ist der Winkel α höchstens 40 % größer als der Winkel β. In einer weiteren bevorzugten Ausgestaltungsvariante kann der sich ergebende Radius gemäß Fig. 4 im Bereich von Bezugszeichen 12 höchstens 30 %, bevorzugt höchstens 20 %, insbesondere maximal 15 % größer sein als der Radius bei Bezugszeichen 13 in Fig. 5. Der Radius kann auch Bodenradius genannt werden.

Ferner, alternativ oder ergänzend, ist der Radius am Übergang zum Flansch 6 gemäß Fig. 4 maximal 30 %, insbesondere maximal 20 % und besonders bevorzugt höchstens maximal 15 % größer als der Übergang des Radius zum Flansch 6 gemäß Fig. 5. Die zuvor genannten relativen Verhältnisse zwischen den Winkeln bzw. den jeweiligen Übergangsradien können auf alle Ausführungsgestaltungen dieser Schrift übertragen werden ohne dabei den Offenbarungsgehalt der Erfindung zu verlassen.

### Bezugszeichen:

- 1 -: Wanne
- 2 -: Batterieträger
- 3-: Boden
- 4-: Längswand
- 5-: Querwand
- 6-: Flansch

- 8 -: Längsstreben
- 9 -: Quersicken
- 10 -: Eckbereich
- 11 -: Übergang v. 6
- 12 -: außenliegender Eckbereich
- 13 -: Übergang
- 14 -: Platine
- 15 -: abgerundete Ecke
- 16 -: Übergangsbereich
- 17 -: Bereich
- 18 -: Übergangsbereich
- 19 -: Längssicken
- 20 -: Quersicken

- L -: Längsrichtung
- X -: Kraftfahrzeuglängsrichtung
- Y -: Kraftfahrzeugquerrichtung
- α -: Winkel zu einer Vertikalen
- β -: Winkel zu einer Vertikalen

## Patentansprüche

1. Batteriewanne (1) für einen Batterieträger eines Elektrofahrzeuges, wobei die Batteriewanne (1) einen Boden (3) und eine sich einstückig und werkstoffeinheitlich von dem Boden (3) erstreckende umlaufende Wand mit Seitenwänden, wobei die umlaufende Wand auf die Kraftfahrzeugquerrichtung bezogen, zwei außenliegende Seitenwände aufweist und, in Kraftfahrzeuglängsrichtung frontseitig eine Vorderwand und heckseitig eine Rückwand aufweist und optional einen außen umlaufenden von der Wand abstehenden Flansch (6), wobei die Batteriewanne (1) aus einer härtbaren Stahlblechplatine (13) als warmumgeformtes und pressgehärtetes Bauteil hergestellt ist, mit einer Zugfestigkeit Rm größer gleich 1250 MPa, **dadurch gekennzeichnet, dass** in einem jeweiligen Eckbereich (10) zwischen zwei einander angrenzenden Seitenwänden (4, 5) die Zugfestigkeit Rm kleiner 1100 MPa ist.

2. Batteriewanne (1) nach Anspruch 1, **dadurch gekennzeichnet, dass** der mindestens eine Eckbereich (10) zwischen Boden (3) und zwei angrenzenden Seitenwänden (4, 5) ausgebildet ist.

3. Batteriewanne (1) nach einem der Ansprüche 1 oder 2, **dadurch gekennzeichnet, dass** die Zugfestigkeit Rm in dem Eckbereich (10) zwischen 900 MPa und 550 MPa, bevorzugt jeweils 600 MPa und 800 MPa ausgebildet ist.

4. Batteriewanne (1) nach einem der vorgenannten Ansprüche, **dadurch gekennzeichnet, dass** der Flansch (6) in dem mindestens einen Eckbereich (10) eine Zugfestigkeit größer gleich 1250 MPa aufweist, insbesondere ist der Flansch (6) umlaufend vollständig gehärtet.

5. Batteriewanne (1) nach einem der vorgenannten Ansprüche, **dadurch gekennzeichnet, dass** in dem mindestens einen Eckbereich (10) ein Mischgefüge aus Bainit und/oder Ferrit und/oder Perlit optional mit Anteilen von Martensit ausgebildet ist.

6. Batteriewanne (1) nach einem der vorgenannten Ansprüche, **dadurch gekennzeichnet, dass** in einem Übergang (13) von Boden (3) zu Seitenwand (4, 5) die Zugfestigkeit Rm größer 1250 MPa ausgebildet ist, wobei bevorzugt der Übergang (13) über mindestens 70 % der Länge einer Seitenwand (4, 5) erstreckt und als Tiefziehradius geformt ist.

7. Batteriewanne (1) nach einem der vorgenannten Ansprüche, **dadurch gekennzeichnet, dass** außenseitig an der Seitenwand (4, 5) und/oder dem Flansch (6), eine Seitenverstärkung, vorzugsweise als Blechbauteil oder ein Hohlprofil gekoppelt ist.

8. Batteriewanne (1) nach einem der vorgenannten Ansprüche, **dadurch gekennzeichnet, dass** diese eine erste Korrosionsschutzschicht aufweist, insbesondere auf AlSi-Basis, wobei insbesondere eine zweite Korrosionsschutzschicht auf der ersten Schicht angeordnet ist, vorzugsweise eine KTL oder Pulverlackschicht.

9. Batteriewanne (1) nach einem der vorgenannten Ansprüche, **dadurch gekennzeichnet, dass** die Seitenwände (4, 5) an einer Front- und Rückseite eine unterschiedliche Höhe aufweisen, zu den Seitenwänden an den Fahrzeugseiten, wobei ein dazu passender Deckel (7) oder Haube ebenfalls als Wanne und komplementär zu den unterschiedlichen Seitenwandhöhen geformt ist.

10. Batteriewanne (1) nach einem der vorgenannten Ansprüche, **dadurch gekennzeichnet, dass** in dem Boden (3) Längs- und/oder Quersicken (8, 9) eingeformt sind.

11. Verfahren zu Herstellung einer Batteriewanne (1) nach Anspruch 1, **gekennzeichnet, durch** folgende Verfahrensschritte:
- Bereitstellen einer Platine (14) aus einer härtbaren Stahllegierung,
- Partielles Austenitisieren oder vollständiges Austenitisieren und partielles Zwischenkühlen der späteren Eckbereiche der Seitenwände,
- Einlegen in ein Warmumform- und Presshärtewerkzeug, und Warmumformen und Presshärten, wobei in der Batteriewanne (1) eine Zugfestigkeit Rm größer gleich 1250 MPa eingestellt wird und in den Eckbereichen (10) eine Zugfestigkeit kleiner 1100 MPa.

## Claims

1. Battery tray (1) for a battery carrier of an electric vehicle, wherein the battery tray (1) comprises a base (3) and a circumferential wall with side walls extending integrally and made of the same material from the base (3), wherein the circumferential wall, with respect to the transverse direction of the motor vehicle, has two outer side walls and, in the longitudinal direction of the motor vehicle, has a front wall at the front side and a rear wall at the rear side, and optionally an outwardly circumferential flange (6) protruding from the wall, wherein the battery tray (1) is manufactured from a hardenable sheet steel blank (13) as a hot-formed and press-hardened component, with a tensile strength Rm greater than or equal to 1250 MPa, **characterized in that**, in each corner region (10) between two adjacent side walls (4, 5), the tensile strength Rm is less than 1100 MPa.

2. Battery tray (1) according to claim 1, **characterized in that** the at least one corner region (10) is formed between the base (3) and two adjacent side walls (4, 5).

3. Battery tray (1) according to one of claims 1 or 2, **characterized in that** the tensile strength Rm in the corner region (10) is between 900 MPa and 550 MPa, preferably between 600 MPa and 800 MPa.

4. Battery tray (1) according to one of the preceding claims, **characterized in that** the flange (6) in the at least one corner region (10) has a tensile strength greater than or equal to 1250 MPa; in particular, the flange (6) is fully hardened over its entire circumference.

5. Battery tray (1) according to one of the preceding claims, **characterized in that**, in the at least one corner region (10), a mixed microstructure of bainite and/or ferrite and/or pearlite, optionally with portions of martensite, is formed.

6. Battery tray (1) according to one of the preceding claims, **characterized in that**, in a transition (13) from the base (3) to the side wall (4, 5), the tensile strength Rm is greater than 1250 MPa, wherein the transition (13) preferably extends over at least 70% of the length of a side wall (4, 5) and is formed as a deep-drawing radius.

7. Battery tray (1) according to one of the preceding claims, **characterized in that**, on the outer side of the side wall (4, 5) and/or the flange (6), a side reinforcement is attached, preferably in the form of a sheet metal component or a hollow profile.

8. Battery tray (1) according to one of the preceding claims, **characterized in that** it comprises a first corrosion protection layer, in particular based on AlSi, wherein in particular a second corrosion protection layer is arranged on the first layer, preferably a cathodic dip coating (KTL) or a powder coating layer.

9. Battery tray (1) according to one of the preceding claims, **characterized in that** the side walls (4, 5) have a different height at a front side and a rear side compared to the side walls on the vehicle sides, wherein a corresponding cover (7) or hood is likewise formed as a tray and is shaped complementarily to the differing side wall heights.

10. Battery tray (1) according to one of the preceding claims, **characterized in that** longitudinal and/or transverse beads (8, 9) are formed in the base (3).

11. Method for producing a battery tray (1) according to claim 1, **characterized by** the following process steps: providing a blank (14) made of a hardenable steel alloy, partial austenitizing or full austenitizing and partial intermediate cooling of the later corner regions of the side walls, placing the blank into a hot forming and press-hardening tool, and hot forming and press hardening, wherein in the battery tray (1) a tensile strength Rm greater than or equal to 1250 MPa is set, and in the corner regions (10) a tensile strength of less than 1100 MPa.

## Revendications

1. Bac de batterie (1) pour un support de batterie d'un véhicule électrique, le bac de batterie (1) comprenant un fond (3) et une paroi périphérique s'étendant de manière monobloc et homogène en matériau à partir du fond (3), ladite paroi périphérique comprenant des parois latérales, la paroi périphérique présentant, par rapport à la direction transversale du véhicule, deux parois latérales extérieures et, dans la direction longitudinale du véhicule, une paroi avant côté avant et une paroi arrière côté arrière, et comprenant en option une bride périphérique extérieure (6) s'étendant à partir de la paroi, le bac de batterie (1) étant réalisé à partir d'une tôle d'acier trempable (13) sous forme d'une pièce mise en forme à chaud et trempée sous presse, avec une résistance à la traction Rm supérieure ou égale à 1250 MPa, **caractérisé en ce que**, dans chaque zone d'angle (10) entre deux parois latérales adjacentes (4, 5), la résistance à la traction Rm est inférieure à 1100 MPa.

2. Bac de batterie (1) selon la revendication 1, **caractérisé en ce qu'**au moins une zone d'angle (10) est formée entre le fond (3) et deux parois latérales adjacentes (4, 5).

3. Bac de batterie (1) selon l'une des revendications 1 ou 2, **caractérisé en ce que** la résistance à la traction Rm dans la zone d'angle (10) est comprise entre 900 MPa et 550 MPa, de préférence entre 600 MPa et 800 MPa.

4. Bac de batterie (1) selon l'une des revendications précédentes, **caractérisé en ce que** la bride (6) présente, dans la zone d'angle (10), une résistance à la traction supérieure ou égale à 1250 MPa, en particulier la bride (6) est entièrement trempée sur toute sa périphérie.

5. Bac de batterie (1) selon l'une des revendications précédentes, **caractérisé en ce que**, dans la zone d'angle (10), une microstructure mixte de bainite et/ou de ferrite et/ou de perlite, éventuellement avec des fractions de martensite, est formée.

6. Bac de batterie (1) selon l'une des revendications précédentes, **caractérisé en ce que**, dans une zone de transition (13) entre le fond (3) et la paroi latérale (4, 5), la résistance à la traction Rm est supérieure à 1250 MPa, la zone de transition (13) s'étendant de préférence sur au moins 70 % de la longueur d'une paroi latérale (4, 5) et étant formée comme un rayon d'emboutissage.

7. Bac de batterie (1) selon l'une des revendications précédentes, **caractérisé en ce qu'**un renfort latéral est fixé sur la face extérieure de la paroi latérale (4, 5) et/ou de la bride (6), de préférence sous forme d'une pièce en tôle ou d'un profil creux.

8. Bac de batterie (1) selon l'une des revendications précédentes, **caractérisé en ce qu'**il comporte une première couche de protection contre la corrosion, notamment à base d'AISi, une seconde couche de protection contre la corrosion étant notamment disposée sur la première couche, de préférence une couche de cataphorèse (KTL) ou une couche de peinture en poudre.

9. Bac de batterie (1) selon l'une des revendications précédentes, **caractérisé en ce que** les parois latérales (4, 5) présentent, du côté avant et du côté arrière, une hauteur différente par rapport aux parois latérales situées sur les côtés du véhicule, un couvercle (7) ou capot correspondant étant également réalisé sous forme de bac et étant formé de manière complémentaire aux différentes hauteurs des parois latérales.

10. Bac de batterie (1) selon l'une des revendications précédentes, **caractérisé en ce que** des nervures longitudinales et/ou transversales (8, 9) sont formées dans le fond (3).

11. Procédé de fabrication d'un bac de batterie (1) selon la revendication 1, **caractérisé par** les étapes suivantes: mise à disposition d'une tôle (14) en alliage d'acier trempable, austénitisation partielle ou austénitisation complète et refroidissement intermédiaire partiel des futures zones d'angle des parois latérales, mise en place dans un outil de formage à chaud et de trempe sous presse, et formage à chaud et trempe sous presse, une résistance à la traction Rm supérieure ou égale à 1250 MPa étant obtenue dans le bac de batterie (1) et une résistance à la traction inférieure à 1100 MPa dans les zones d'angle (10).
